# EUROPÄISCHE PATENTSCHRIFT

(11) **EP 4 152 648 B1**
(45) Veröffentlichungstag und Bekanntmachung des Hinweises auf die Patenterteilung: **05.08.2026**
(21) Anmeldenummer: 22196354.9
(22) Anmeldetag: 19.09.2022
(51) Int. Cl.: H04B 10/70

(54) **VERFAHREN ZUR QUANTENKOMMUNIKATION**
METHOD FOR QUANTUM COMMUNICATION
PROCÉDÉ DE COMMUNICATION QUANTIQUE

(30) Priorität: 20.09.2021 DE 102021124223
(43) Veröffentlichungstag der Anmeldung: 22.03.2023
(73) Patentinhaber: Quantum Optics Jena GmbH, 07745 Jena (DE)
(72) Erfinder: SANSA PERNA, Adrià, 07745 Jena (DE); ZANNOTTI, Alessandro, 07743 Jena (DE); DE VRIES, Oliver, 07745 Jena (DE); HEILMANN, René, 99195 Schwansee (DE)
(74) Vertreter: Louis Pöhlau Lohrentz

(56) Entgegenhaltungen:
- CN-A- 113 055 098
- APPAS F ET AL: "Flexible entanglement-based secure communication with an AlGaAs chip for quantum networks", ARXIV.ORG, CORNELL UNIVERSITY LIBRARY, 201 OLIN LIBRARY CORNELL UNIVERSITY ITHACA, NY 14853, 9 February 2021 (2021-02-09), XP081878211
- WENGEROWSKY SÖREN ET AL: "An entanglement-based wavelength-multiplexed quantum communication network", NATURE, NATURE PUBLISHING GROUP UK, LONDON, vol. 564, no. 7735, 12 December 2018 (2018-12-12), pages 225 - 228, XP036657342, ISSN: 0028-0836, [retrieved on 20181212], DOI: 10.1038/S41586-018-0766-Y

## Beschreibung

Die Erfindung betrifft ein Verfahren zur Quantenkommunikation zwischen mehreren Empfängern in einem Netzwerk nach den Merkmalen des Oberbegriffs des Anspruchs 1 und ein Netzwerksystem zur Quantenkommunikation zwischen mehreren Empfängern nach den Merkmalen des Oberbegriffs des Anspruchs 14.

Quantenkommunikation ermöglicht die Kommunikation oder die Generation eines Quantenschlüssels durch die Übertragung oder den Austausch von Einzelphotonen. Dazu werden beispielsweise verschränkte Photonenpaare benutzt, die in einer Quelle erzeugt werden, wobei anschließend jeweils ein Photon pro Paar an jeweils einen Empfänger übertragen wird, um eine Kommunikation oder die Erzeugung des Schlüssels zwischen diesen beiden Empfängern zu ermöglichen.

Die Übertragung der Photonen erfolgt in einem Netzwerk aus Quantenkanälen. Darin sind entweder alle Empfänger direkt über jeweils einen Quantenkanal miteinander verbunden, oder die Verbindung der Empfänger erfolgt über eine Quelle, welche jeweils über einen Quantenkanal mit jedem Empfänger verbunden ist. Ein Quantenkanal kann beispielsweise ein Glasfaserkabel oder eine Freistrahlverbindung sein. Die Entfernung der Übertragung von Photonen in derartigen Netzwerken ist allerdings durch den Verlust in den Quantenkanälen limitiert, wobei die heutige maximale Distanz in Glasfasern ohne den Einsatz von vertrauenswürdigen Knotenpunkten, sogenannten Trusted Nodes, im Bereich von ca. 200 km liegt.

Der Nachteil von Quantennetzwerken mit direkter Verbindung der Empfänger untereinander liegt in dem großen technischen und finanziellen Aufwand der benötigten vielen Quantenkanälen, der vielen Quellen und Empfänger.

Der Nachteil von bekannten Quantennetzwerken, welche über eine Quelle mehrere Empfänger verbinden, liegt in der niedrigen Übertragungsrate der Quantenkommunikation, wenn eine Vielzahl von Empfängern zur Quantenkommunikation mit verschränkten Photonen versorgt werden sollen. In bekannten Quantennetzwerken werden in der Quelle verschränkte Photonenpaare in einem breiten Frequenzspektrum erzeugt, wobei dieses breite Frequenzspektrum in einem Frequenz-Multiplexer in mehrere Frequenzbänder aufgeteilt wird. Jedes Frequenzband wird einem Empfänger zugeordnet. Die Wellenlänge der erzeugten verschränkten Photonenpaare verteilt sich statistisch auf das breite Frequenzspektrum der Quelle. Durch die Aufteilung des breiten Frequenzspektrums in die einzelnen Frequenzbänder entsprechend der Anzahl der Empfänger reduziert sich Übertragungsrate bei mehreren Empfängern drastisch. Die geringe Übertragungsrate kann nicht beliebig durch die vermehrte Erzeugung von Photonenpaaren in der Quelle gesteigert werden, da dadurch die Wahrscheinlichkeit steigt, mehrere unkorrelierte Photonenpaare zum gleichen Zeitpunkt zu erzeugen, die bei den Empfängern zu Fehlmessungen führen.

Quantennetzwerke sind bekannt aus Appas, F. et al.: "Flexible entanglement-based secure communication with an AlGaAs chip for quantum networks", Wengerowsky, S. et al.: "An etanglement-based wavelength-multiplexed quantum communication network" und CN113055098A.

Der vorliegenden Erfindung liegt die Aufgabe zugrunde, ein verbessertes, kostengünstigeres und effizienteres Verfahren zur Quantenkommunikation und ein effizienteres Netzwerksystem zur Quantenkommunikation bereitzustellen, um eine Quantenkommunikation auch über größere Entfernungen und zwischen mehreren Empfängern, insbesondere mit hoher Übertragungsrate zu ermöglichen.

Diese Aufgabe wird erfindungsgemäß durch ein Verfahren zur Quantenkommunikation zwischen mehreren Empfängern in einem Netzwerk nach den Merkmalen des Anspruchs 1 gelöst.

Verfahren zur Quantenkommunikation, vorzugsweise zur Verwendung für optische Kommunikation, Quantenkryptographie und/oder Quanteninformatik, zwischen mindestens drei Empfängern, vorzugsweise zwischen i Empfängern mit i = *3 bis n,* umfassend eine Quelle, einen Frequenz-Multiplexer, die mehreren Empfänger und ein Netzwerk aus Quantenkanälen, wobei das Verfahren folgende Schritte umfasst:
i) Erzeugung eines verschränkten Photonen-Paares in der Quelle mit einem Signal-Photon und einem Idler-Photon, wobei das Signal-Photon in einem Signal-Wellenlängenbereich erzeugt wird und das Idler-Photon in einem Idler-Wellenlängenbereich erzeugt wird;
ii) Zuordnen der Signal- und Idler-Photonen anhand ihrer Wellenlänge auf die Quantenkanäle in dem Frequenz-Multiplexer;
iii) Übertragen des Photonenpaars über die Quantenkanäle zu den Empfängern;
iv) Detektieren des Photonen-Paares bei den Empfängern zur Quantenkommunikation. Erfindungsgemäß ist vorgesehen, dass die in Schritt i) erzeugten Photonen in einem spektral voneinander getrennten Signal-Wellenlängenbereich und Idler-Wellenlängenbereich erzeugt werden, und dass in Schritt ii) die Photonen den Quantenkanälen derart zugeordnet werden, dass an einem ersten Empfänger in Schritt iii) nur Signal-Photonen zur Kommunikation mit allen anderen Empfängern übertragen werden, und an einem zweiten Empfänger in Schritt iii) nur Idler-Photonen zur Kommunikation mit allen anderen Empfängern übertragen werden, und an die weiteren Empfänger in Schritt iii) sowohl Signal-Photonen als auch Idler-Photonen zur Kommunikation mit allen anderen Empfängern übertragen werden, und
   dass alle Empfänger über jeweils einen Quantenkanal mit der Quelle verbunden sind.

Weiter wird die zugrunde liegende Aufgabe erfindungsgemäß durch ein Netzwerksystem zur Quantenkommunikation nach den Merkmalen des Anspruchs 14 gelöst.

Erfindungsgemäß wird ein Netzwerksystem zur Quantenkommunikation zwischen mehreren Empfängern vorgeschlagen, vorzugsweise mit i Empfängern mit i = *3 bis n,* vorzugsweise zur Verwendung für optische Kommunikation, Quantenkryptographie und/oder Quanteninformatik,
wobei das Netzwerksystem eine Quelle, einen Frequenz-Multiplexer, ein Netzwerk aus Quantenkanälen und die mehreren Empfänger aufweist,
wobei die Quelle verschränkte Photonenpaare mit jeweils einem Signal-Photon und einem Idler-Photon erzeugt, und das Signal-Photon eine Wellenlänge in einem Signal-Wellenlängenbereich aufweist und das Idler-Photon eine Wellenlänge in einem Idler-Wellenlängenbereich aufweist, und
wobei der Frequenz-Multiplexer die Signal- und Idler-Photonen anhand ihrer Wellenlänge den Quantenkanälen zuordnet, und
wobei jeder Empfänger ein Detektionsmodul mit mindesten einem Detektor aufweist zur Detektion der Photonen zur Quantenkommunikation.

Erfindungsgemäß ist vorgesehen, dass der Signal-Wellenlängenbereich und der Idler-Wellenlängenbereich spektral getrennt voneinander ausgebildet sind, und dass das Netzwerk zwischen der Quelle und jedem Empfänger zur Übertragung der Photonen einen Quantenkanal aufweist, und
dass die Quantenkanäle derart dem Frequenz-Multiplexer zugeordnet sind, dass an einem ersten Empfänger nur Signal-Photonen zur Kommunikation mit allen anderen Empfängern übertragen werden, und an einem zweiten Empfänger nur Idler-Photonen zur Kommunikation mit allen anderen Empfängern übertragen werden, und an die weiteren Empfänger sowohl Signal-Photonen als auch Idler-Photonen zur Kommunikation mit allen anderen Empfängern übertragen werden.

Ein Vorteil des erfindungsgemäßen Verfahrens und Netzwerks liegt in der speziellen Zuordnung der Photonen auf die Quantenkanäle, indem an dem ersten Empfänger nur Signal-Photonen zur Kommunikation mit allen anderen Empfängern übertragen werden, und an dem zweiten Empfänger nur Idler-Photonen zur Kommunikation mit allen anderen Empfängern übertragen werden. Diese Zuordnung erfolgt durch die Anordnung der Quantenkanäle zum Frequenz-Multiplexer und die Aufteilung der Photonen anhand ihrer Wellenlänge. Vorteilhaft ergibt sich dadurch, dass für den ersten und den zweiten Empfänger der Quantenkanal und auch die Detektion an den entsprechenden Wellenlängenbereich angepasst werden können, um eine bessere Kommunikationsrate oder Übertragungsrate zu ermöglichen, d.h. die Kommunikationsrate bzw. die Übertragungsrate der Quantenkommunikation wird verbessert, indem die Zuordnung der Photonen entsprechend bestimmten Eigenschaften der Empfänger wie beispielsweise der Entfernung oder der Detektion erfolgt.

Ein weiterer Vorteil des erfindungsgemäßen Verfahrens und Netzwerks ist die direkte Verbindung der Quelle jeweils durch einen Quantenkanal mit jedem Empfänger. Dadurch steigt die Anzahl der physischen Verbindungen, d.h. der Quantenkanäle nur über die Relation *n*(*n* - 1)/2. Im Gegensatz dazu wäre für ein Netzwerk mit direkter Verbindung der einzelnen Empfänger untereinander eine Vielzahl an zusätzlichen Quantenkanälen notwendig.

Vorteilhaft kann vorgesehen sein, dass in Schritt i) zeitlich nacheinander mehrere Photonenpaare erzeugt werden, welche dann entsprechend den Schritten ii) bis iv) nacheinander auf die Empfänger aufgeteilt, übertragen und detektiert werden, um eine Quantenkommunikation zwischen den Empfängern mit mehreren Photonenpaaren zu ermöglichen.

Unter weiteren Empfängern sind dabei alle Empfänger des erfindungsgemäßen Verfahrens oder Netzwerksystems zu verstehen, welche nicht der erste oder der zweite Empfänger sind. Beispielsweise weist ein Netzwerk mit vier Empfängern den ersten Empfänger, den zweiten Empfänger und zwei weitere Empfänger auf.

Ein Netzwerk mit beispielsweise sechs Empfängern weist den ersten Empfänger, den zweiten Empfänger und vier weitere Empfänger auf.

Es kann vorgesehen sein, dass die Schritte i) bis iv) zur Erzeugung eines gemeinsamen Schlüsselpaares für Quantenkryptographie, und/oder zur optischen Kommunikation und/oder zur Quanteninformation verwendet werden.

Es kann vorgesehen sein, dass der Signal-Wellenlängenbereich und der Idler-Wellenlängenbereich um mindestens 50 nm spektral getrennt voneinander ausgebildet sind, vorzugsweise um mindestens 100 nm, höchst vorzugsweise um mindestens 300 nm. Der Vorteil einer derart großen spektralen Trennung der Wellenlängen der Signal- und Idler-Photonen liegt darin, dass die Photonen in Schritt ii) ohne Verluste und durch kostengünstige und einfache Bauteile entsprechend ihrer Wellenlänge den Quantenkanälen zugeordnet werden können. Die Zuordnung kann dadurch ohne Verluste der erzeugten Photonen und derart rein erfolgen, dass eine hohe Kommunikationsrate zwischen den Empfängern gewährleistet wird. Vorteilhaft ergibt sich dadurch eine kostengünstige, verlustfreie und einfache Aufteilung der Signal- und Idler-Photonen im Frequenz-Multiplexer auf die Quantenkanäle. Dadurch ist es auch möglich, breitbandige verlustarme Frequenz-Multiplexer einzusetzen, wodurch die Übertragungsrate weiter erhöht wird.

Vorzugsweise ist unter Zuordnen der Signal- und Idler-Photonen anhand ihrer Wellenlänge auf die Quantenkanäle in dem Frequenz-Multiplexer in Schritt ii) zu verstehen, dass die Quelle Signal- und Idler-Photonen mit verschiedenen Wellenlängen erzeugt und die Photonen, vorzugsweise in einer räumlichen Mode, zum Frequenz-Multiplexer übertragen werden. Der Frequenz-Multiplexer teilt die Signal- und Idler-Photonen entsprechend ihrer Wellenlänge auf verschiedene Quantenkanäle auf. Es kann vorgesehen sein, dass die Kanäle des Frequenz-Multiplexers eine spektrale Breite zwischen 0,1 nm und 5 nm aufweisen. Durch eine derartige Ausgestaltung können kostengünstige Bauteile verwendet werden.

Durch die relativ große spektrale Breite der Kanäle weist das System zudem nur sehr geringere Verluste durch die Zuordnung auf die Quantenkanäle auf.

Es kann vorgesehen sein, dass der Signal-Wellenlängenbereich zwischen 400 nm und 900 nm ausgebildet ist, vorzugsweise zwischen 600 nm und 850 nm. Der Vorteil dieses Bereichs liegt darin, dass Silizium-basierende Einzelphoton-Detektoren benutzt werden können, welche einfach und kostengünstig hergestellt werden können und im Bereich zwischen 600 nm und 850 nm eine hohe Detektionseffizienz aufweisen.

Es kann vorgesehen sein, dass der Idler-Wellenlängenbereich zwischen 950 nm und 2 µm ausgebildet ist, vorzugsweise zwischen 1260 nm und 1360 nm (O-Band), und/oder zwischen 1360 nm und 1460 nm (E-Band), und/oder zwischen 1460 nm und 1530 nm (S-Band), und/oder zwischen 1530 nm und 1565 nm (C-Band), und/oder zwischen 1565 nm und 1625 nm (L-Band). Ein Vorteil dieser Wellenlängenbereiche liegt in der hohen Transmissionsrate in Glasfaserkabeln zur Übertragung der Photonen in einer Faser auch über große Entfernungen.

Aus den voran beschriebenen spektral getrennten Signal- und Idler-Wellenlängenbereichen ergibt sich der weitere Vorteil, dass eine Übermittlung bzw. Zuordnung von Idler Photonen zu Empfängern wellenlängenabhängig erfolgen kann um Entfernungsverluste auszugleichen. Beispielsweise kann die Zuordnung derart erfolgen, dass dem weitest entfernten Empfänger nur Idler-Photonen übermittelt werden, welche durch ihre Wellenlänge einen deutlich geringeren Verlust bei der Übertragung in Glasfasern aufweisen. Weiter können beispielsweise dem nächstliegenden oder einem nahen Empfänger nur Signal-Photonen übermittelt werden, welche eine Wellenlänge mit höheren Verlusten in der Glasfaser aufweisen, aber kostengünstigere Detektoren besitzen oder Detektoren mit höherer Detektionseffizienz benutzen. Der Vorteil dieser Ausgestaltung liegt in der einfachen und verlustfreien Aufteilung der Photonen durch den Frequenz-Multiplexer, da hier nicht ein breites spektrales Spektrum unter hohen Verlusten aufgeteilt wird.

Es kann vorgesehen sein, dass jeweils zwei Empfänger der Photonen eines Photon-Paares ein Kommunikationspaar bilden, vorzugsweise mit *k* = *i*(*i* - 1)/2 Kommunikationspaaren bei i Empfängern ausgebildet sind. Es kann vorgesehen sein, dass für jedes Kommunikationspaar jeweils ein Signal-Photon und ein Idler-Photon in Schritt i) in jeweils einem spezifischen Teil-Wellenlängenbereich erzeugt wird, wobei jeder Teil-Wellenlängenbereich für jedes Kommunikationspaar spektral getrennt von den Teil-Wellenlängenbereichen aller anderen Kommunikationspaare ausgebildet ist. Dabei werden sowohl die Signal-Photonen als auch die Idler-Photonen weiter in dem jeweiligen Signal-Wellenlängenbereich und Idler-Wellenlängenbereich erzeugt. Dies bedeutet insbesondere, dass der Signal-Wellenlängenbereich in Signal-Teil-Wellenlängenbereiche unterteilt wird entsprechend der Anzahl der Kommunikationspaare, wobei die Signal-Teil-Wellenlängenbereiche spektral getrennt voneinander ausgebildet sind. Dies gilt analog für den Idler-Wellenlängenbereich, d.h. dass der Idler-Wellenlängenbereich in Idler-Teil-Wellenlängenbereiche unterteilt wird entsprechend der Anzahl der Kommunikationspaare, wobei die Idler-Teil-Wellenlängenbereiche spektral getrennt voneinander ausgebildet sind. Der Vorteil dieser Ausgestaltung liegt in der einfachen und verlustfreien Aufteilung der Photonen durch den Frequenz-Multiplexer, da hier nicht ein breites Spektrum unter hohen Verlusten aufgeteilt wird, sondern die Erzeugung der Photonenpaare gleich spektral getrennt für jedes Kommunikationspaar erfolgt und dadurch die Aufteilung im Frequenz-Multiplexer kostengünstiger, einfacher und ohne große Verluste erfolgen kann. Der Vorteil dieser Ausgestaltung liegt in der eindeutigen Zuordnung korrelierter Photonenpaare zwischen den kommunizierenden Kommunikationspaaren, während weitere Photonen die nicht Teil des jeweiligen Teil-Wellenlängenbereichs sind, als unkorrelierte Photonen und somit als Rauschen erkannt werden oder durch Filterung das Signal nicht verschlechtern, wodurch durch den Vorteil der Erfindungen die Fehlerrate (Quantum Bit Error Rate QBER) deutlich reduziert wird.

Es kann vorgesehen sein, dass die spektrale Breite der Signal- und Idler-Photonen kleiner 5 nm ist, vorzugsweise kleiner 2 nm ist, höchst vorzugsweise kleiner 0,1 nm ist. Es kann vorgesehen sein, dass die spektrale Breite Signal- und Idler-Photonen kleiner oder gleich der spektralen Breite des Frequenz-Multiplexers ist.

Es kann vorgesehen sein, dass die Signal-Teil-Wellenlängenbereiche derart spektral getrennt sind, dass höchstens 5% des Wellenlängen-Spektrums zweier Signal-Photonen überlappt, vorzugsweise höchsten 1%, höchst vorzugsweise 0,01%. Es kann vorgesehen sein, dass die Idler-Teil-Wellenlängenbereiche derart spektral getrennt sind, dass höchstens 5% des Wellenlängen-Spektrums zweier Idler-Photonen überlappt, vorzugsweise höchsten 1%, höchst vorzugsweise 0,01%. Der Vorteil einer derart geringen Überlappung besteht in einer höheren Dichte der Signal-Teil-Wellenlängenbereiche, wobei der Überlapp derart gering gehalten wird, dass die dadurch entstehenden Verluste bei der Zuordnung die hohe Kommunikationsrate nicht wesentlich beeinflussen.

Es kann vorgesehen sein, dass die Signal-Teil-Wellenlängenbereiche und/oder die Idler-Teil-Wellenlängenbereiche verschiedener Kommunikationspaare mindestens einmal der spektralen Breite (Halbwertsbreite oder Bandbreite) der Signal- und/oder Idler-Photonen spektral getrennt voneinander ausgebildet sind, vorzugsweise mindestens die doppelte spektrale Breite (Halbwertsbreite oder Bandbreite), höchst vorzugsweise mindestens mehr als die vierfache spektrale Breite (Halbwertsbreite oder Bandbreite). Ein Vorteil einer größeren Separation der einzelnen Paar-Signal-Wellenlängen und/oder Paar-Idler-Wellenlängen für verschiedener Kommunikationspaare liegt darin, dass die Signal- und/oder Idler-Photonen der verschiedenen Kommunikationspaare durch den Frequenz-Multiplexer sehr präziser und ohne Verluste aufgeteilt werden können.

Es kann vorgesehen sein, dass die Quelle zur gleichzeitigen Quantenkommunikation zwischen mehreren Kommunikationspaaren ausgebildet ist, indem in Schritt i) gleichzeitig für zwei oder mehrere Kommunikationspaare jeweils ein Photonen-Paar erzeugt wird. Der Vorteil dieser erfindungsgemäßen Ausgestaltung liegt in der gleichzeitigen hohen Übertragungsrate zwischen mehreren Kommunikationspaaren. Dadurch wird die Übertragungsrate bei der Quantenkommunikation nicht wie bei bekannten Quellen entsprechend der Anzahl der Kommunikationspaare reduziert, sondern ermöglicht eine hohe Übertragungsrate auch gleichzeitig zwischen mehreren Kommunikationspaaren. Besonders vorteilhaft ist die gleichzeitige Erzeugung von mehreren Photonenpaaren für mehrere Kommunikationspaare in Kombination mit der spektralen Unterteilung der Signal- und Idler-Wellenlängenbereiche in die Teil-Wellenlängenbereiche für die unterschiedlichen Kommunikationspaare. Der Vorteil liegt darin, dass mehrere Kommunikationspaare gleichzeitig mit einer hohen Übertragungsrate kommunizieren können und die Zuordnung und Aufteilung im Frequenz-Multiplexer annähernd Verlustfrei erfolgt, da die Wellenlängen der Signal- und Idler-Photonen eines Paares, die Signal-Photonen mehrerer Kommunikationspaare und die Idler-Photonen mehrerer Kommunikationspaare spektral voneinander getrennt ausgebildet sind.

Es kann vorgesehen sein, dass zur gleichzeitigen Quantenkommunikation in Schritt ii) die Photonen den Quantenkanälen derart zugeordnet werden, dass an einen ersten Empfänger in Schritt iii) nur Signal-Photonen zur Kommunikation mit allen anderen Empfängern übertragen werden, und an einen zweiten Empfänger in Schritt iii) nur Idler-Photonen zur Kommunikation mit allen anderen Empfängern übertragen werden, und an die weiteren Empfänger in Schritt iii) sowohl Signal-Photonen als auch Idler-Photonen zur Kommunikation mit allen anderen Empfängern übertragen werden. Es ist möglich, dass zur gleichzeitigen Quantenkommunikation an zwei Kommunikationspaare oder drei Kommunikationspaare oder mehrere Kommunikationspaare oder alle Kommunikationspaare Photonen übermittelt werden.

Es kann vorgesehen sein, dass zur gleichzeitigen Quantenkommunikation in Schritt ii) mehrere Signal- und/oder Idler Photonen für einen Empfänger anhand ihrer Wellenlänge auf den einen Quantenkanal des Empfängers zugeordnet werden können, und dass in Schritt iii) die mehreren Signal- und/oder Idler Photonen für einen Empfänger in einem Quantenkanal zum Empfänger übertragen werden, und in Schritt iv) die mehreren Signal- und/oder Idler Photonen bei einem Empfänger detektiert werden. Der Vorteil besteht darin, dass zur gleichzeitigen Quantenkommunikation mit mehreren Empfängern nicht mehrere Quantenkanäle notwendig sind, sondern die Übertragung über den jeweils einen Quantenkanal zwischen Quelle und Empfänger erfolgt.

Gleichzeitig bedeutet hier, dass zwei oder mehrere verschränkte Photonenpaare innerhalb der Messzeit eines Photons in einem Detektor erzeugt werden, vorzugsweise im langsamsten Detektor des Systems, wobei die Messzeit hier die Detektion des Photons und die Totzeit des Detektors umfasst, wobei die Erzeugung in der Quelle stattfindet. Unter Totzeit des Detektors ist die Zeit zu verstehen, welche ein Detektor benötigt, um nach einer Detektion eines Photons in dessen elektrischen Ausgangszustand zurückzukehren, um ein nachfolgendes Photon zu detektieren.

Es kann vorgesehen sein, dass gleichzeitig eine Übertragungsrate zwischen zwei oder mehreren Kommunikationspaaren von mindestens 1kHz, vorzugsweise mindestens 100kHz, höchst vorzugsweise mindesten 10MHz durchgeführt wird.

Es kann vorgesehen sein, dass ein oder mehrere oder alle Quantenkanäle als Glasfaserkanäle ausgebildet sind und/oder Glasfaserstrecken aufweisen. Der Vorteil einer derartigen Ausgestaltung liegt im kostengünstigen und einfachen Aufbau des Netzwerks.

Es kann vorgesehen sein, dass der Quantenkanal zwischen der Quelle und den weiteren Empfängern eine Glasfaser, oder zwei Glasfasern oder mehrere Glasfasern aufweist, wobei vorzugsweise bei zwei oder mehreren Glasfasern diese für unterschiedliche Wellenlängenbereiche optimiert sind, vorzugsweise für den Signal-Wellenlängenbereich und/oder den Idler-Wellenlängenbereich. Der Vorteil des Quantenkanals mit nur einer Glasfaser liegt in dem kostengünstigen und einfachen Aufbau. Der Vorteil des Quantenkanals mit zwei oder mehreren Glasfasern liegt darin, dass zur Übertragung des Photons zum Empfänger die Glasfaser mit den geringsten Verlusten oder Störungen gewählt werden kann.

Es kann vorgesehen sein, dass ein oder mehrere Quantenkanäle als nicht geführter Quantenkanal ausgebildet ist, vorzugsweise dass die Übertragung durch die Luft, oder Vakuum oder eine Flüssigkeit erfolgt. Der Vorteil eines derartigen Quantenkanals sind die geringen Verluste bei der Übertragung. Vorzugsweise ist der Empfänger eines nicht geführten Quantenkanals in einem Satelliten angeordnet.

Es kann vorgesehen sein, dass der erste Empfänger höchstens 20 km von der Quelle entfernt angeordnet ist, vorzugsweise höchstens 10 km, höchst vorzugsweise höchstens 2 km oder in unmittelbarer näher zur Quelle angeordnet ist. Der Vorteil dieser Ausgestaltung liegt darin, dass zur Detektion der Signal-Photonen in diesem Wellenlängenbereich kostengünstige Detektoren mit hoher Effizienz benutzt werden können, wobei durch die nahe Anordnung zur Quelle sichergestellt wird, dass der Verlust in den Quantenkanälen den Vorteil der hohen Detektionseffizienz nicht überwiegt. Weiter ist es bei einer nahen Anordnung auch möglich kostengünstige Quantenkanäle, vorzugsweise kostengünstige Fasern zu verwenden, da auch bei einem kurzen Übertragungsweg die Verluste nicht so gravierend sind.

Es kann vorgesehen sein, dass der zweite Empfänger, welcher nur Idler-Photonen empfängt, über eine Glasfaser mit der Quelle verbunden ist, vorzugsweise dass die Glasfaser eine Länge von größer 20 km, höchst vorzugsweise mindestens 50 km oder mindestens 100 km aufweist. Der Vorteil des erfindungsgemäßen Verfahrens und Systems liegt darin, dass auch bei einer Kommunikation zwischen mehreren Empfängern eine hohe Übertragungsrate zu einem weit entfernten Empfänger sichergestellt werden kann, indem dieser nur Idler-Photonen erhält, welche eine Wellenläge im Idler-Wellenlängenbereich aufweist.

Es kann vorgesehen sein, dass die Quelle verschränkte Photonenpaare durch einen nicht-linearen Prozess erzeugt, vorzugsweise durch down-conversion, oder spontaneous parametric down-conversion, oder four-wave mixing.

Es kann vorgesehen sein, dass die verschränkten Photonenpaare in der Zeit, und/oder der Polarisation, und/oder im Bahndrehimpuls, und/oder im Spin-Drehimpuls verschränkt sind.

Es kann vorgesehen sein, dass der Empfänger ein Detektionsmodul mit mindestens einem Detektor oder mit mehreren Detektoren aufweist.

Es kann vorgesehen sein, dass der eine Detektor oder die mehreren Detektoren als Einzelphoton-Detektoren ausgebildet sind, vorzugsweise als Germanium- oder Silizium-Detektoren, oder Einzelphotonen-Lawinendioden oder Indium-GalliumArsenid Detektoren, oder supraleitende Nanodraht-Einzelphoton-Detektoren, oder Silizium-Avalanche Photodioden ausgebildet sind.

Es kann vorgesehen sein, dass das Detektionsmodul zur Bestimmung der Verschränkungseigenschaft ein Messmodul aufweist, vorzugsweise einen Polarisator, und/oder ein unsymmetrisches Interferometer, und/oder einen Spatial Light Modulator (SLM).

Es kann vorgesehen sein, dass der Empfänger mehrere Detektionsmodule aufweist mit jeweils mindestens einem Detektor oder mit mehreren Detektoren zur Kommunikation, wobei jedes Detektionsmodul zur Kommunikation mit einem Empfänger ausgebildet ist. Dadurch kann der Empfänger gleichzeitig mit mehreren anderen Empfängern kommunizieren. Es kann vorgesehen sein, dass vor den mehreren Detektionsmodulen Frequenz-Filter angeordnet sind, um eine Kommunikation mit mehreren Empfängern gleichzeitig zu ermöglichen, indem die Photonen anhand ihrer Wellenlänge auf die Detektionsmodule aufgeteilt werden. Dadurch kann jedem Empfänger im Netzwerk ein Detektionsmodul zugeordnet werden.

Es kann vorgesehen sein, dass der Frequenz-Filter als dichroitischer Spiegel, oder als Gitter, oder als Filter ausgebildet ist.

Es kann vorgesehen sein, dass zwei oder mehrere erfindungsgemäße Netzwerksysteme über einen Empfänger miteinander verbunden sind, indem sich beide Netzwerksysteme diesen Empfänger teilen. Vorzugsweise wird über diesen Empfänger zur Kommunikation zwischen den Netzwerksystemen hinweg eine Bell-State-Messung, Swapping, oder eine Quantenteleportation durchgeführt. Vorzugsweise ist der Empfänger über den zwei Netzwerksysteme verbunden sind der erste Empfänger oder der zweite Empfänger. Der Vorteil einer derartigen Ausgestaltung liegt darin, dass die Vorteile des erfindungsgemäßen Netzwerksystems sogar über die Entfernung und Reichweite eines Netzwerksystems hinweg vergrößert werden können.

Weitere Ausführungen der Erfindung sind in den Figuren dargestellt und nachfolgend beschrieben. In den Figuren ist beispielhaft eine mögliche Ausgestaltung der Erfindung gezeigt. Diese Ausgestaltung dient der Erläuterung einer möglichen Umsetzung der Erfindung und soll nicht eingrenzend verstanden werden. Dabei zeigen:
- Fig. 1:: Eine schematische Darstellung des erfindungsgemäßen Netzwerksystems mit drei Empfängern;
- Fig. 2:: Eine schematische Darstellung des erfindungsgemäßen Netzwerksystems mit vier Empfängern;
- Fig. 3:: Eine schematische Darstellung des erfindungsgemäßen Netzwerksystems mit sechs Empfängern;
- Fig. 4:: Netzwerksystem aus Fig. 2 mit spezieller Anordnung des ersten und zweiten Empfängers;
- Fig. 5:: Zwei erfindungsgemäße Netzwerksysteme, welche über einen zweiten Empfänger miteinander verbunden sind;
- Fig. 6:: Zwei erfindungsgemäße Netzwerksysteme, welche über einen ersten Empfänger miteinander verbunden sind.

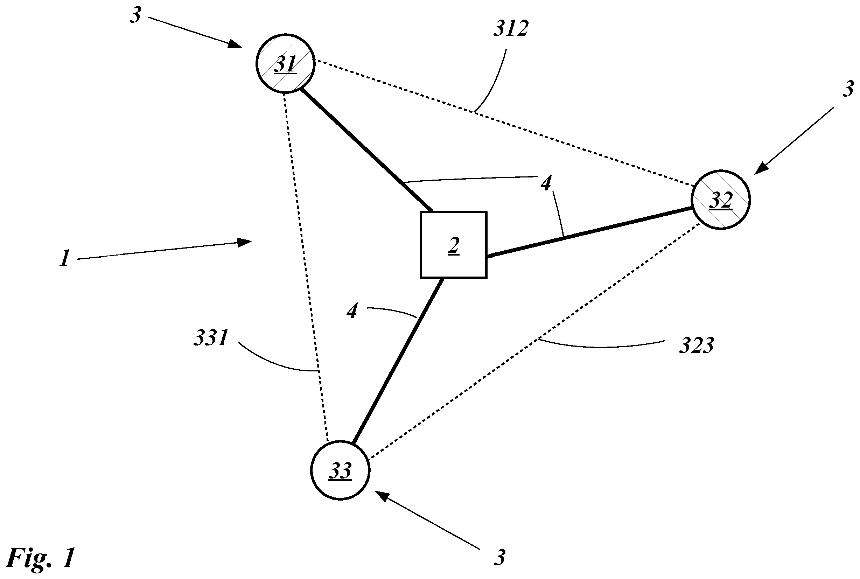

Fig. 1 zeigt eine schematische Darstellung des erfindungsgemäßen Netzwerkssystems 1, mit einer Quelle 2, drei Empfängern 3, welche über jeweils einen Quantenkanal 4 mit der Quelle 2 verbunden sind.

Das Netzwerksystem 1 verbindet die Quelle 2 über jeweils einen Quantenkanal 4 mit jedem Empfänger 3. In der Quelle 2 werden verschränkte Photonenpaare erzeugt mit jeweils einem Signal-Photon und einem Idler-Photon. Zur Kommunikation zwischen zwei Empfängern 3 werden das Signal-Photon und das Idler-Photon eines Paares an jeweils einen Empfänger 3 durch die jeweiligen Quantenkanäle 4 übertragen.

Die Quelle 2 weist einen Frequenz-Multiplexer auf, welcher die in der Quelle 2 erzeugten Photonen anhand ihrer Wellenlänge den Quantenkanälen 4 der Empfänger 3 zuordnet. Dabei erfolgt die Zuordnung derart, dass ein erster Empfänger 31 nur Signal-Photonen erhält, unabhängig davon, mit welchem weiteren Empfänger 3 dieser kommuniziert. Weiter erfolgt die Zuordnung derart, dass ein zweiter Empfänger 32 nur Idler-Photonen erhält, unabhängig davon, mit welchem weiteren Empfänger 3 dieser kommuniziert. Der weitere (dritte) Empfänger 33 in Fig. 1 erhält einmal Idler-Photonen, wenn dieser mit dem ersten Empfänger 31 kommuniziert und erhält Signal-Photonen, wenn dieser mit dem zweiten Empfänger 32 kommuniziert.

Dabei bilden die beiden Empfänger 3, welche sich die Photonen eines Paares teilen, jeweils ein Kommunikationspaar, im Beispiel der Fig. 1 bilden der erste Empfänger 31 mit dem zweiten Empfänger 32 ein erstes Kommunikationspaar 312, der zweite Empfänger 32 mit dem weiteren (dritte) Empfänger 33 ein zweites Kommunikationspaar 323 und der weitere (dritte) Empfänger 33 mit dem ersten Empfänger 21 ein drittes Kommunikationspaar 331.

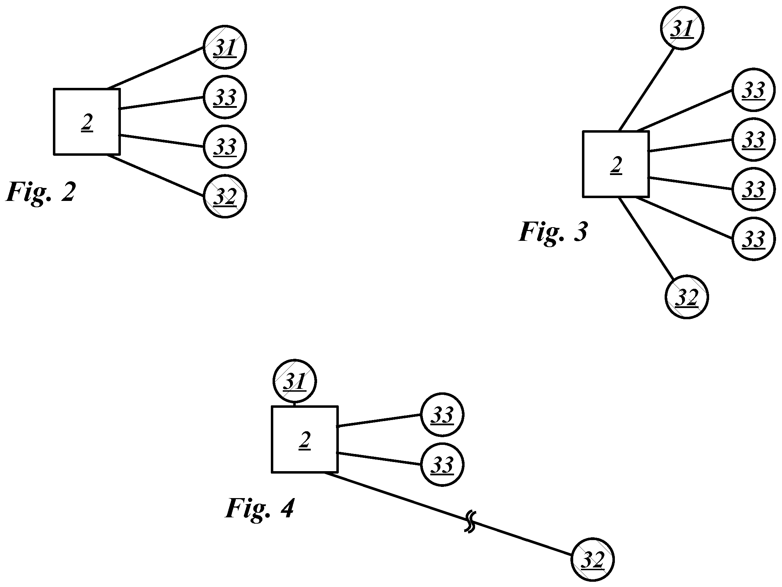

Die Ausführungsbeispiele der Fig. 2 und 3 zeigen zwei erfindungsgemäße Netzwerksysteme 1 mit vier Empfängern 3 (Fig. 2) und mit sechs Empfängern 3 (Fig. 3). Wie auch im erfindungsgemäßen Netzwerksystem 1 in Fig. 1 weisen beide Netzwerksysteme 1 jeweils einen ersten Empfänger 31, einen zweiten Empfänger 32 und mehrere weitere Empfänger 33 auf, wobei in Fig. 2 zwei weitere Empfänger 33 und in Fig. 3 vier weitere Empfänger 33 ausgebildet sind. Die Zuordnung der Photonen auf die Empfänger 3 erfolgt in den Fig. 2 und 3 analog zum Ausführungsbeispiel der Fig. 1, indem der erster Empfänger 31 nur Signal-Photonen erhält, unabhängig davon, mit welchen weiteren Empfängern 3 dieser kommuniziert. Weiter erfolgt die Zuordnung derart, dass der zweite Empfänger 32 nur Idler-Photonen erhält, unabhängig davon, mit welchen weiteren Empfängern 3 dieser kommuniziert. Die weiteren (dritte) Empfänger 33 in Fig. 2 und 3 erhalten Idler-Photonen oder Signal-Photonen, abhängig davon mit welchem Empfänger 3 diese kommunizieren.

Fig. 4 zeigt ein erfindungsgemäßes Netzwerksystem 1 als schematische Darstellung, wobei der erste Empfänger 31 räumlich nah an der Quelle 2 angeordnet ist und der zweite Empfänger 32 räumlich weit entfernt von der Quelle 2 angeordnet ist. Dadurch werden die Vorteile der Aufteilung auf die Quantenkanäle 4 sowie der speziellen Erzeugung der Photonen im Signal- und Idler- Wellenlängenbereich deutlich, indem abhängig von der Wellenlänge der Photonen für den ersten Empfänger 31 kostengünstige Detektoren mit hoher Detektionseffizienz benutzt werden können und für den zweiten Empfänger 32 ein geringer Verlust in der Übertragung auch bei weiterer Entfernung ermöglicht wird.

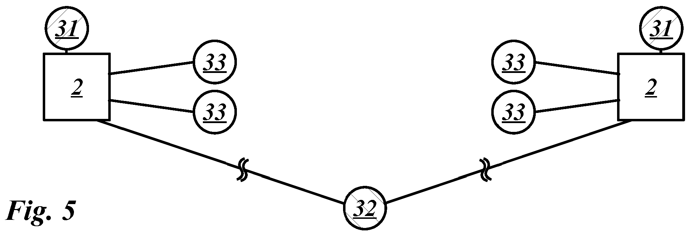

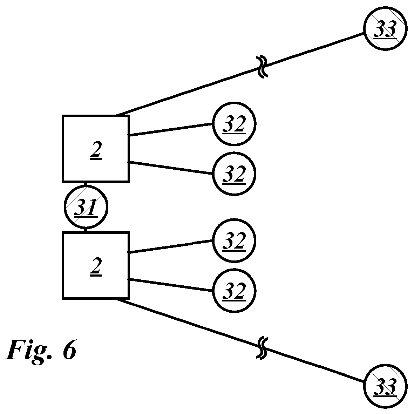

Die Fig. 5 und 6 zeigen jeweils zwei erfindungsgemäße Netzwerksysteme 1, welche sich einmal den ersten Empfänger 31 (Fig. 6) und einmal den zweiten Empfänger 32 (Fig. 5) teilen. Dies bedeutet, dass der geteilte Empfänger 31 und 32 jeweils mit einem Quantenkanal 4 mit jeder Quelle 2 verbunden ist. Nun kann zur Kommunikation zwischen den Netzwerksystemen 1 hinweg über den ersten Empfänger 31 (Fig. 6) oder den zweiten Empfänger 32 (Fig. 5) eine Bell-State Messung, Swapping oder eine Quantenteleportation durchgeführt werden, wobei gleichzeitig die Vorteile des erfindungsgemäßen Netzwerksystems 1 erhalten bleiben.

### Bezugszeichenliste

- 1: Netzwerksystem

- 2: Quelle

- 3: Empfänger
- 31: erster Empfänger
- 32: zweiter Empfänger
- 33: weitere Empfänger
- 312: erstes Kommunikationspaar
- 323: zweites Kommunikationspaar
- 331: drittes Kommunikationspaar

- 4: Quantenkanal

## Patentansprüche

1. Verfahren zur Quantenkommunikation, vorzugsweise zur Verwendung für
optische Kommunikation, Quantenkryptographie und/oder
Quanteninformatik, zwischen mindestens drei Empfängern (3), vorzugsweise zwischen *i* Empfängern (3) mit i = 3 *bis n,* umfassend eine Quelle (2), einen Frequenz-Multiplexer, die mindestens drei Empfänger (3) und
ein Netzwerk aus Quantenkanälen (4), wobei das Verfahren folgende Schritte umfasst:
i) Erzeugung eines verschränkten Photonen-Paares in der Quelle (2) mit einem Signal-Photon und einem Idler-Photon, wobei das Signal-Photon in einem Signal-Wellenlängenbereich erzeugt wird und das Idler-Photon in einem Idler-Wellenlängenbereich erzeugt wird;
ii) Zuordnen der Signal- und Idler-Photonen anhand ihrer Wellenlänge auf die Quantenkanäle (4) in dem Frequenz-Multiplexer;
iii) Übertragen des Photonenpaars über die Quantenkanäle (4) zu den Empfängern (3);
iv) Detektieren des Photonen-Paares bei den Empfängern (3) zur Quantenkommunikation,
wobei die in Schritt i) erzeugten Photonen in einem spektral voneinander getrennten Signal-Wellenlängenbereich und Idler-Wellenlängenbereich erzeugt werden, und **dadurch gekennzeichnet, dass** in Schritt ii) die Photonen den Quantenkanälen (4) derart zugeordnet werden, dass an einem ersten Empfänger (31) in Schritt iii) nur Signal-Photonen zur Kommunikation mit allen anderen Empfängern (3) übertragen werden, und an einem zweiten Empfänger (32) in Schritt iii) nur Idler-Photonen zur Kommunikation mit allen anderen Empfängern (3) übertragen werden, und an die weiteren Empfänger (33) in Schritt iii) sowohl Signal-Photonen als auch Idler-Photonen zur Kommunikation mit allen anderen Empfängern (3) übertragen werden, und
dass alle Empfänger (3) über jeweils einen Quantenkanal (4) mit der Quelle (2) verbunden sind.

2. Verfahren zur Quantenkommunikation nach Anspruch 1, wobei der Signal-Wellenlängenbereich und der Idler-Wellenlängenbereich um mindestens 50 nm spektral getrennt voneinander ausgebildet sind, vorzugsweise um mindestens 100 nm, höchst vorzugsweise um mindestens 300 nm.

3. Verfahren zur Quantenkommunikation nach Anspruch 1 oder 2, wobei der Signal-Wellenlängenbereich zwischen 400 nm und 900 nm ausgebildet ist, vorzugsweise zwischen 600 nm und 850 nm.

4. Verfahren zur Quantenkommunikation nach einem der Ansprüche 1 bis 3, wobei der Idler-Wellenlängenbereich zwischen 950 nm und 2 µm ausgebildet ist, vorzugsweise zwischen 1260 nm und 1360 nm (O-Band), und/oder zwischen 1360 nm und 1460 nm (E-Band), und/oder zwischen 1460 nm und 1530 nm (S-Band), und/oder zwischen 1530 nm und 1565 nm (C-Band), und/oder zwischen 1565 nm und 1625 nm (L-Band).

5. Verfahren zur Quantenkommunikation nach einem der Ansprüche 1 bis 4, wobei die spektrale Breite der Signal- und Idler-Photonen kleiner 5 nm ist vorzugsweise kleiner 2 nm ist, höchst vorzugsweise kleiner 0,1 nm ist, vorzugsweise dass die spektrale Breite Signal- und Idler-Photonen kleiner oder gleich einer spektralen Breite des Frequenz-Multiplexers ist.

6. Verfahren zur Quantenkommunikation nach einem der Ansprüche 1 bis 5, wobei jeweils zwei Empfänger (3) der Photonen eines Photon-Paares ein Kommunikationspaar bilden, vorzugsweise mit k = *i*(*i -* 1)/2 Kommunikationspaaren bei i Empfängern (3) ausgebildet sind, vorzugsweise dass für jedes Kommunikationspaar jeweils ein Signal-Photon und ein Idler-Photon in Schritt i) in jeweils einem spezifischen Teil-Wellenlängenbereich erzeugt wird, wobei jeder Teil-Wellenlängenbereich für jedes Kommunikationspaar spektral getrennt von den Teil-Wellenlängenbereichen aller anderen Kommunikationspaare ausgebildet ist.

7. Verfahren zur Quantenkommunikation nach Anspruch 6,
wobei die Signal-Teil-Wellenlängenbereiche derart spektral getrennt sind, dass höchstens 5% des Wellenlängen-Spektrums zweier Signal-Photonen überlappt, vorzugsweise höchsten 1%, höchst vorzugsweise 0,01% und/oder
dass die Idler-Teil-Wellenlängenbereiche derart spektral getrennt sind, dass höchstens 5% des Wellenlängen-Spektrums zweier Idler-Photonen überlappt, vorzugsweise höchsten 1%, höchst vorzugsweise 0,01%.

8. Verfahren zur Quantenkommunikation nach Anspruch 6 oder 7, wobei die Quelle (2) zur gleichzeitigen Quantenkommunikation zwischen mehreren Kommunikationspaaren ausgebildet ist, indem in Schritt i) gleichzeitig für zwei oder mehrere Kommunikationspaare jeweils ein Photonen-Paar erzeugt wird.

9. Verfahren zur Quantenkommunikation nach Anspruch 8, wobei zur gleichzeitigen Quantenkommunikation in Schritt ii) die Photonen den Quantenkanälen (4) derart zugeordnet werden, dass an einen ersten Empfänger (31) in Schritt iii) nur Signal-Photonen zur Kommunikation mit allen anderen Empfängern (3) übertragen werden, und an einen zweiten Empfänger (32) in Schritt iii) nur Idler-Photonen zur Kommunikation mit allen anderen Empfängern (3) übertragen werden, und an die weiteren Empfänger (33) in Schritt iii) sowohl Signal-Photonen als auch Idler-Photonen zur Kommunikation mit allen anderen Empfängern (3) übertragen werden.

10. Verfahren zur Quantenkommunikation nach einem der Ansprüche 6 bis 9, wobei gleichzeitig eine Übertragungsrate zwischen zwei oder mehreren Kommunikationspaaren von mindestens 1kHz, vorzugsweise mindestens 100kHz, höchst vorzugsweise mindesten 10MHz durchgeführt wird.

11. Verfahren zur Quantenkommunikation nach einem der Ansprüche 1 bis 10, wobei der erste Empfänger (31), welcher nur Signal-Photonen empfängt, höchstens 20 km von der Quelle (2) entfernt angeordnet ist, vorzugsweise höchstens 10 km, höchst vorzugsweise höchstens 2 km oder in unmittelbarer näher zur Quelle (2) angeordnet ist, und/oder dass der zweite Empfänger (32), welcher nur Idler-Photonen empfängt, über eine Glasfaser mit der Quelle (2) verbunden ist, vorzugsweise dass die Glasfaser eine Länge von größer 20 km, höchst vorzugsweise mindestens 50 km oder mindestens 100km aufweist.

12. Verfahren zur Quantenkommunikation nach einem der Ansprüche 1 bis 11, wobei der Empfänger (3) ein Detektionsmodul mit mindestens einem Detektor oder mit mehreren Detektoren aufweist, und/oder dass der Empfänger (3) mehrere Detektionsmodule aufweist mit jeweils mindestens einem Detektor oder mit mehreren Detektoren zur Kommunikation, wobei jedes Detektionsmodul zur Kommunikation mit einem Empfänger (3) ausgebildet ist.

13. Verfahren zur Quantenkommunikation nach einem der Ansprüche 1 bis 12, wobei zwei oder mehrere Netzwerksysteme (1) über einen Empfänger (3) miteinander verbunden sind, indem beide Netzwerksysteme (1) diesen Empfänger (3) teilen, indem über diesen Empfänger (3) zur Kommunikation zwischen den Netzwerksystemen (1) hinweg eine Bell-State-Messung, Swapping, oder eine Quantenteleportation durchgeführt wird, vorzugsweise ist der Empfänger (3) über den die zwei Netzwerksysteme (1) verbunden sind der erste Empfänger (31) oder der zweite Empfänger (32).

14. Netzwerksystem (1) zur Quantenkommunikation zwischen mindestens drei
Empfängern (3), vorzugsweise mit i Empfängern (3) mit i = *3 bis n,* vorzugsweise zur Verwendung für optische Kommunikation, Quantenkryptographie und/oder Quanteninformatik,
wobei das Netzwerksystem (1) eine Quelle (2), einen Frequenz-Multiplexer, ein Netzwerk aus Quantenkanälen (4) und die mindestens drei Empfänger (3)
aufweist,
wobei die Quelle (2) verschränkte Photonenpaare mit jeweils einem Signal-Photon und einem Idler-Photon erzeugt, und das Signal-Photon eine Wellenlänge in einem Signal-Wellenlängenbereich aufweist und das Idler-Photon eine Wellenlänge in einem Idler-Wellenlängenbereich aufweist, und wobei der Frequenz-Multiplexer die Signal- und Idler-Photonen anhand ihrer Wellenlänge den Quantenkanälen (4) zuordnet, und
wobei jeder Empfänger (3) ein Detektionsmodul mit mindesten einem Detektor aufweist zur Detektion der Photonen zur Quantenkommunikation,
wobei der Signal-Wellenlängenbereich und der Idler-Wellenlängenbereich spektral getrennt voneinander ausgebildet sind, und
**dadurch gekennzeichnet, dass** das Netzwerk zwischen der Quelle (2) und jedem Empfänger (3) zur Übertragung der Photonen einen Quantenkanal (4) aufweist, und dass die Quantenkanäle (4) derart dem Frequenz-Multiplexer zugeordnet sind, dass an einem ersten Empfänger (31) nur Signal-Photonen zur Kommunikation mit allen anderen Empfängern (3) übertragen werden, und an einem zweiten Empfänger (32) nur Idler-Photonen zur Kommunikation mit allen anderen Empfängern (3) übertragen werden, und an die weiteren Empfänger (33) sowohl Signal-Photonen als auch Idler-Photonen zur Kommunikation mit allen anderen Empfängern (3) übertragen werden.

15. Netzwerksystem (1) nach Anspruch 14, wobei zwei oder mehrere erfindungsgemäße Netzwerksysteme (1) über einen Empfänger (3) miteinander verbunden sind, indem sich beide Netzwerksysteme (1) diesen Empfänger (3) teilen.

## Claims

1. A method for quantum communication, preferably for use in optical communication, quantum cryptography, and/or quantum computing, between at least three receivers (3), preferably between *i* receivers (3) with *i* = 3 *to n,* comprising a source (2), a frequency multiplexer, the at least three receivers (3), and a network of quantum channels (4), wherein the method comprises the following steps:
(i) generating an entangled photon pair in the source (2), comprising a signal photon and an idler photon, wherein the signal photon is generated in a signal wavelength range and the idler photon is generated in an idler wavelength range;
(ii) assigning the signal and idler photons to the quantum channels (4) in the frequency multiplexer based on their wavelength;
iii) transmitting the photon pair to the receivers (3) via the quantum channels (4);
(iv) detecting the photon pair at the receivers (3) for quantum communication, wherein the photons generated in step i) are generated in a spectrally different signal wavelength range and idler wavelength range, and
**characterized in that**
in step ii) the photons are assigned to the quantum channels (4) in such a way that, at a first receiver (31) in step iii), only signal photons are transmitted for communication with all other receivers (3), and at a second receiver (32) in step iii), only idler photons are transmitted for communication with all other receivers (3), and that in step iii), both signal photons and idler photons are transmitted to the further receivers (33) for communication with all other receivers (3), and
that all receivers (3) are each connected to the source (2) via a quantum channel (4).

2. Method for quantum communication according to claim 1,
wherein the signal wavelength range and the idler wavelength range are spectrally separated from each other by at least 50 nm, preferably by at least 100 nm, most preferably by at least 300 nm.

3. Method for quantum communication according to claim 1 or 2,
wherein the signal wavelength range is between 400 nm and 900 nm, preferably between 600 nm and 850 nm.

4. Method for quantum communication according to one of claims 1 to 3,
wherein the idler wavelength range is between 950 nm and 2 µm, preferably between 1260 nm and 1360 nm (O-band), and/or between 1360 nm and 1460 nm (E-band), and/or between 1460 nm and 1530 nm (S-band), and/or
between 1530 nm and 1565 nm (C-band), and/or between 1565 nm and 1625 nm (L-band).

5. Method for quantum communication according to one of claims 1 to 4, wherein the spectral width of the signal and idler photons is less than 5 nm, preferably less than 2 nm, most preferably less than 0.1 nm, and preferably that the spectral width of the signal and idler photons is less than or equal to the spectral width of the frequency multiplexer.

6. Method for quantum communication according to one of claims 1 to 5, wherein, in each case, two receivers (3) of the photons of a photon pair form a communication pair, preferably with *k = i*(*i -* 1)/2 communication pairs are formed with i receivers (3), preferably that for each communication pair, a signal photon and an idler photon are generated in step i) in a respective specific sub-wavelength range, wherein each sub-wavelength range for each communication pair is spectrally separated from the sub-wavelength ranges of all other communication pairs.

7. Method for quantum communication according to claim 6,
wherein the signal sub-wavelength ranges are spectrally separated such that no more than 5% of the wavelength spectrum of two signal photons overlap, preferably no more than 1%, most preferably 0.01%, and/or
that the idler sub-wavelength ranges are spectrally separated such that no more than 5% of the wavelength spectrum of two idler photons overlap, preferably no more than 1%, and most preferably 0.01%.

8. Method for quantum communication according to claim 6 or 7,
wherein the source (2) is configured for simultaneous quantum communication between several communication pairs by generating, in step i), a photon pair for each of two or more communication pairs simultaneously.

9. Method for quantum communication according to claim 8,
wherein for simultaneous quantum communication in step ii) the photons are assigned to the quantum channels (4) in such a way that, to a first receiver (31) in step iii), only signal photons are transmitted for communication with all other receivers (3), and to a second receiver (32) in step iii), only idler photons are transmitted for communication with all other receivers (3), and that in step iii), both signal photons and idler photons are transmitted to the further receivers (33) for communication with all other receivers (3).

10. Method for quantum communication according to one of claims 6 to 9, Wherein, simultaneously, a transmission rate of at least 1 kHz, preferably at least 100 kHz, most preferably at least 10 MHz between two or more communication pairs is realized.

11. Method for quantum communication according to one of claims 1 to 10,
wherein the first receiver (31), which receives only signal photons, is located no more than 20 km from the source (2), preferably no more than 10 km, most preferably is located no more than 2 km or in the immediate vicinity of the source (2), and/or
that the second receiver (32), which receives only idler photons, is connected to the source (2) via an optical fiber, preferably that the optical fiber has a length of more than 20 km, most preferably at least 50 km or at least 100 km.

12. Method for quantum communication according to one of claims 1 to 11,
wherein the receiver (3) comprises a detection module with at least one detector or with several detectors, and/or
that the receiver (3) comprises several detection modules, each having at least one detector or several detectors for communication, wherein each detection module is configured to communicate with a receiver (3).

13. Method for quantum communication according to one of claims 1 to 12, wherein two or more network systems (1) are connected to each other via a receiver (3), with both network systems (1) sharing this receiver (3), wherein a Bell-state measurement, swapping, or quantum teleportation is performed via this receiver (3) for communication between the network systems (1), preferably, the receiver (3) via which the two network systems (1) are connected is the first receiver (31) or the second receiver (32).

14. A network system (1) for quantum communication between at least three receivers (3), preferably comprising *i* receivers (3) with *i* = 3 *to n,* preferably for use in optical communication, quantum cryptography, and/or quantum computing,
wherein the network system (1) comprises a source (2), a frequency multiplexer, a network of quantum channels (4), and the at least three receivers (3),
wherein the source (2) generates entangled photon pairs, each comprising a signal photon and an idler photon, and the signal photon has a wavelength within a signal wavelength range and the idler photon has a wavelength within an idler wavelength range, and
wherein the frequency multiplexer assigns the signal and idler photons to the quantum channels (4) based on their wavelength, and
wherein each receiver (3) comprises a detection module with at least one detector for detecting photons for quantum communication,
wherein the signal wavelength range and the idler wavelength range are spectrally separated from each other, and
**characterized in that**
the network between the source (2) and each receiver (3) includes a quantum channel (4) for transmitting the photons, and
that the quantum channels (4) are assigned to the frequency multiplexer in such a way that, at a first receiver (31), only signal photons are transmitted for communication with all other receivers (3), and at a second receiver (32), only idler photons are transmitted for communication with all other receivers (3), and that both signal photons and idler photons are transmitted to the further receivers (33) for communication with all other receivers (3).

15. Network system (1) according to claim 14,
wherein two or more network systems (1) according to the invention are connected to each other via a receiver (3), with both network systems (1) sharing this receiver (3).

## Revendications

1. Procédé de communication quantique, destiné de préférence à la communication optique, à la cryptographie quantique et/ou à l'informatique quantique, entre au moins trois récepteurs (3), de préférence entre *i* récepteurs (3) avec *i* = 3 à *n,* comprenant une source (2), un multiplexeur de fréquences, lesdits au moins trois récepteurs (3) et un réseau de canaux quantiques (4), le procédé comprenant les étapes suivantes:
i) générer une paire de photons intriqués dans la source (2), composée d'un photon de signal et d'un photon idler, le photon de signal étant généré dans une plage de longueurs d'onde de signal et le photon idler dans une plage de longueurs d'onde idler;
ii) affecter les photons de signal et les photons idler aux canaux quantiques (4) dans le multiplexeur de fréquences en fonction de leur longueur d'onde;
iii) transmission de la paire de photons vers les récepteurs (3) via les canaux quantiques (4);
iv) détection de la paire de photons au niveau des récepteurs (3) destinés à la communication quantique,
où les photons générés à l'étape i) sont produits dans une plage de longueurs d'onde de signal et une plage de longueurs d'onde idler spectralement séparées l'une de l'autre, et
**caractérisé en ce que**
à l'étape ii), les photons sont affectés aux canaux quantiques (4) de telle sorte qu'à un premier récepteur (31), à l'étape iii), seuls des photons de signal soient transmis pour communiquer avec tous les autres récepteurs (3), et qu'à un deuxième récepteur (32), à l'étape iii), seuls des photons idler soient transmis pour communiquer avec tous les autres récepteurs (3), et qu'aux autres récepteurs (33), à l'étape iii), à la fois des photons de signal et des photons idler soient transmis pour la communication avec tous les autres récepteurs (3), et
que tous les récepteurs (3) sont reliés à la source (2) par un canal quantique (4) chacun.

2. Procédé de communication quantique selon la revendication 1,
la plage de longueurs d'onde de signal et la plage de longueurs d'onde idler étant séparées spectralement d'au moins 50 nm, de préférence d'au moins 100 nm, et de manière encore plus préférable d'au moins 300 nm.

3. Procédé de communication quantique selon la revendication 1 ou 2,
la plage de longueurs d'onde de signal étant comprise entre 400 nm et 900 nm, de préférence entre 600 nm et 850 nm.

4. Procédé de communication quantique selon l'une des revendications 1 à 3, la plage de longueurs d'onde idler étant comprise entre 950 nm et 2 µm, de préférence comprise entre 1260 nm et 1360 nm (bande O), et/ou comprise entre 1360 nm et 1460 nm (bande E), et/ou comprise entre 1460 nm et 1530 nm (bande S), et/ou comprise entre 1530 nm et 1565 nm (bande C), et/ou comprise entre 1565 nm et 1625 nm (bande L).

5. Procédé de communication quantique selon l'une des revendications 1 à 4, la largeur spectrale des photons de signal et des photons idler étant inférieure à 5 nm, de préférence inférieure à 2 nm, et de manière particulièrement préférée inférieure à 0,1 nm ; de préférence, la largeur spectrale des photons de signal et des photons idler étant inférieure ou égale à la largeur spectrale du multiplexeur de fréquences.

6. Procédé de communication quantique selon l'une des revendications 1 à 5, chaque deux récepteurs (3) des photons d'une paire de photons formant une paire de communication, de préférence avec *k = i(i -* 1)/2 paires de communication sont formées pour i récepteurs (3), de préférence en ce que, pour chaque paire de communication, un photon de signal et un photon idler sont générés à l'étape i) dans une plage de longueurs d'onde partielle spécifique respective, chaque plage de longueurs d'onde partielle pour chaque paire de communication étant séparée spectralement des plages de longueurs d'onde partielles de toutes les autres paires de communication.

7. Procédé de communication quantique selon la revendication 6,
les plages de longueurs d'onde partielles des photons de signal étant séparées spectralement de telle sorte que, au maximum, 5 % du spectre de longueurs d'onde de deux photons de signal se chevauchent, de préférence 1 % au maximum, et de manière encore plus préférable 0,01 %, et/ou les plages de longueurs d'onde partielles des photons idlers étant séparées spectralement de telle sorte que, au maximum, 5 % du spectre de longueurs d'onde de deux photons idlers se chevauchent, de préférence 1 % au maximum, et de manière encore plus préférable 0,01 %.

8. Procédé de communication quantique selon la revendication 6 ou 7,
la source (2) étant conçue pour permettre une communication quantique simultanée entre plusieurs paires de communication, en générant simultanément, à l'étape i), une paire de photons pour chacune des deux ou plusieurs paires de communication.

9. Procédé de communication quantique selon la revendication 8,
dans lequel, pour la communication quantique simultanée à l'étape ii), les photons sont affectés aux canaux quantiques (4) de telle sorte qu'à un premier récepteur (31), à l'étape iii), seuls des photons de signal soient transmis pour la communication avec tous les autres récepteurs (3), et qu'à un deuxième récepteur (32), à l'étape iii), seuls des photons idler soient transmis pour la communication avec tous les autres récepteurs (3), et qu'aux autres récepteurs (33), à l'étape iii), à la fois des photons de signal et des photons idler soient transmis pour la communication avec tous les autres récepteurs (3).

10. Procédé de communication quantique selon l'une des revendications 6 à 9, dans lequel un débit de transmission d'au moins 1 kHz, de préférence d'au moins 100 kHz, et de manière encore plus préférable d'au moins 10 MHz, est simultanément réalisé entre deux ou plusieurs paires de communication.

11. Procédé de communication quantique selon l'une des revendications 1 à 10,
le premier récepteur (31), qui ne reçoit que des photons de signal, étant situé à une distance maximale de 20 km de la source (2), de préférence à une distance maximale de 10 km, de manière encore plus préférable étant situé à une distance maximale de 2 km ou à proximité immédiate de la source (2), et/ou
que le deuxième récepteur (32), qui ne reçoit que des photons idler, est relié à la source (2) par une fibre optique, de préférence que cette fibre optique a une longueur supérieure à 20 km, et de préférence encore d'au moins 50 km ou d'au moins 100 km.

12. Procédé de communication quantique selon l'une des revendications 1 à 11,
le récepteur (3) comportant un module de détection avec au moins un détecteur ou de plusieurs détecteurs, et/ou
le récepteur (3) comportant plusieurs modules de détection, chacun avec au moins un détecteur ou plusieurs détecteurs destinés à la communication, chaque module de détection étant conçu pour communiquer avec un récepteur (3).

13. Procédé de communication quantique selon l'une des revendications 1 à 12, dans lequel deux ou plusieurs systèmes de réseau (1) sont reliés entre eux par l'intermédiaire d'un récepteur (3), les deux systèmes de réseau (1) partageant ce récepteur (3), une mesure de l'état de Bell, un swapping ou une téléportation quantique étant effectuée via ce récepteur (3) pour la communication entre les systèmes de réseau (1) ; de préférence, le récepteur (3) par l'intermédiaire duquel les deux systèmes de réseau (1) sont reliés est le premier récepteur (31) ou le deuxième récepteur (32).

14. Système de réseau (1) destiné à la communication quantique entre au moins trois récepteurs (3), de préférence comprenant *i* récepteurs (3) avec *i* = 3 à *n,* de préférence destiné à être utilisé pour la communication optique, la cryptographie quantique et/ou l'informatique quantique,
le système de réseau (1) comprenant une source (2), un multiplexeur de fréquences, un réseau de canaux quantiques (4) et les au moins trois récepteurs (3),
la source (2) générant des paires de photons intriqués comprenant chacune un photon de signal et un photon idler, le photon de signal ayant une longueur d'onde comprise dans une plage de longueurs d'onde de signal et le photon idler ayant une longueur d'onde comprise dans une plage de longueurs d'onde idler, et
le multiplexeur de fréquences affectant les photons de signal et les photons idler aux canaux quantiques (4) en fonction de leur longueur d'onde, et chaque récepteur (3) comportant un module de détection comprenant au moins un détecteur destiné à détecter les photons pour la communication quantique,
la plage de longueurs d'onde de signal et la plage de longueurs d'onde idler étant séparées spectralement l'une de l'autre, et
**caractérisé en ce que**
que le réseau entre la source (2) et chaque récepteur (3) comporte un canal quantique (4) pour la transmission des photons, et
que les canaux quantiques (4) sont affectés au multiplexeur de fréquences de telle sorte qu'à un premier récepteur (31), seuls des photons de signal sont transmis pour communiquer avec tous les autres récepteurs (3), et qu'à un deuxième récepteur (32), seuls des photons idler sont transmis pour communiquer avec tous les autres récepteurs (3), et qu'aux autres récepteurs (33), à la fois des photons de signal et des photons idler sont transmis pour la communication avec tous les autres récepteurs (3).

15. Système de réseau (1) selon la revendication 14,
dans lequel deux ou plusieurs systèmes de réseau (1) selon l'invention sont reliés entre eux par l'intermédiaire d'un récepteur (3), les deux systèmes de réseau (1) partageant ce récepteur (3).
